# EUROPEAN PATENT SPECIFICATION

(11) **EP 0 455 481 B1**
(45) Date of publication and mention of the grant of the patent: **07.02.1996**
(21) Application number: 91303951.7
(22) Date of filing: 01.05.1991
(51) Int. Cl.: C08L 23/04

(54) **Improved thermoplastic process**
Verbessertes Verarbeitungsverfahren für Thermoplasten
Procédé amélioré pour le moulage de matières thermoplastiques

(30) Priority: 02.05.1990 US 517786
(43) Date of publication of application: 06.11.1991
(73) Proprietor: SHELL OIL COMPANY, Houston Texas 77002 (US)
(72) Inventor: McCullough, James D., Dr., Houston, Texas 77079 (US); Hwo, Charles C., Sugar Land, Texas 77478 (US)
(74) Representative: Cresswell, Thomas Anthony

(56) References cited:
- EP-A- 0 218 332
- EP-A- 0 343 943
- US-A- 4 501 849
- US-A- 4 657 982
- US-A- 4 672 091

## Description

The present invention relates to a means for extruding a thermoplastic polymer. More particularly, this invention relates to increasing polymer processing rates, by incorporating a high melt index polybutylene into melt incompatible thermoplastic polymers especially polyethylene.

It is well known that some thermoplastics, including thermoplastic elastomers, have excellent properties, but lack good melt processability. Even among readily processable polymers, high toughness and good melt strength are attributes of higher molecular weight grades, and as a result, melt processing machine outputs tend to be inversely related to the toughness required for, e.g. durable goods, and melt strength needed for, e.g. film, thermoforming, blow molding, and injection molding. With the addition of a high melt index polybutylene, polymers which are otherwise difficult to melt process may be processed more easily. Thus, desirable performance properties may be largely retained with little or no sacrifice to melt processability. Therefore, these polymers may be efficiently melt processed while the desirable performance properties of the final product are retained.

Blends of polypropylene and polybutylene have been described, e.g. see U.S. 3,900,534. US-A-4,675,982 discloses extruding blends of polyethylene, and two polybutenes having different molecular weights, in specified proportions. These blends are extruded to form films which are said to exhibit better stretch-cling properties than blends made from a single polybutene. EP-A-0343943 is directed at specific combinations of polymers of but-1-ene and propylene which give rise, on moulding, to shaped articles and film having improved properties, especially stretch properties. However the incorporation of high melt index polybutylene polymers to improve extrusion efficiency has not been disclosed. The present invention provides the use of a high melt index (or low molecular weight) polybutylene, said polybutylene being used in an amount from 0.2 to 20% by weight of the mixture of polybutylene and thermoplastic polymer for improving the extrusion efficiency of a thermoplastic polymer other than polypropylene which is substantially melt incompatible with polybutylene. This use involves less power and significantly increases polymer throughput without significantly diminishing the properties of the parent polymer. The high melt index polybutylene appears to lubricate the polymer melt and, because it is incompatible with the thermoplastic, continues to operate at the surface of the blend. This procedure may be used to more efficiently recycle waste thermoplastic polymers by allowing a wide diversity of polymer grades to be melt processed with less concern for their melt processability.

The amount of polybutylene added is from 0.2% to 20%, preferably from 1% to 10%, and most preferably 2% to 7% by weight of the resulting mixture and is preferably dry blended with the polymer in powder form, prior to extrusion.

The high melt index polybutylene referred to herein is at least one butene-1 polymer generally containing from 90%, preferably from 95%, and more preferably from 97%, by weight of isotactic portions. For example, isotactic poly-1-butenes having a low molecular weight, e.g. less than about 280,000 as determined by solution viscosity in "Decalin" (decahydronaphthalene) may be used. Suitable poly-1-butenes have a density of from 0.900 to 0.925, preferably from 0.905 to 0.920 and most preferably from 0.910 to 0.915. The poly-1-butenes used have melt indices in the range of from 10 to 1000, more preferably from 20 to 650, and most preferably from 100 to 500, as determined by ASTM D-1238 Condition E, at 190°C. The intrinsic viscosity of the polybutylene generally ranges from 0.03 to 0.20, preferably from 0.06 to 0.11 at 130°C.

A butene-1 polymer (PB) usable herein is either a butene-1 homopolymer or a copolymer or a terpolymer. If a butene-1 copolymer is used, the non-butene comonomer content is preferably from 1 to 30 mole % of either ethylene, propylene, or an alpha olefin having from 5 to 8 carbon atoms. The poly-1-butenes can be modified to increase surface activity by reaction with, for example, maleic anhydride.

Suitable poly-1-butenes can be obtained, for example, in accordance with Ziegler-Natta low-pressure polymerization of butene-1, e.g. by polymerizing butene-1 with catalysts of TiCl₃ or TiCl₃.AlCl₃ and Al(C₂H₅)₂Cl at temperatures of 10-50°C, preferably 20-40°C, e.g. according to the process described in DE-A-1,570,353. High melt indices are obtainable by further processing the polymer by peroxide cracking, thermal treatment or irradiation to induce scissons leading to a higher melt flow material.

Duraflex® DP0800, a developmental polybutylene polymer produced by Shell Chemical Company, of Houston, Texas is a particularly suitable polymer. This novel polymer is a homopolymer with a melt index of 200 g/10 min. at 190°C and 490 g/10 min. at 210°C and a molecular weight of 108,000.

Duraflex® PB0400, a commercial polybutylene polymer produced by Shell Chemical Company, is another suitable polymer. The polymer is a homopolymer with a melt index of 20 g/10 min. at 190°C and a molecular weight to 202,000.

The thermoplastics suitable for use in the present invention are any thermoplastics which are incompatible in the melt with polybutylene.

Melt incompatible thermoplastic polymers which can be processed using the present method include a broad range of melt incompatible thermoplastics and thermoplastic elastomers. These thermoplastics include but are not limited to low melt index polyethylene including high density polyethylene, low density polyethylene, linear low density polyethylene and other polyethylene copolymers.

Other thermoplastics include polyamides (nylons), polyesters, polycarbonates, poly-4-methyl pentene, polyimides, polysulfones, polyketones, polyphenylene oxide, ethylene vinyl alcohol, polyvinyl chloride, polyacetals, polystyrene, and similar polymers and copolymers.

Melt incompatible thermoplastic elastomers include styrenic block copolymers, polyesters, polyolefins, and polyurethanes.

Uncured thermosetting materials may be used in the present invention and many include epoxides, crosslinkable polyesters, thermoset polyurethanes, cyanoacrylates, phenolics, urea formaldehydes, and silicones.

Thermoplastic polymers usable herein can be either homopolymers or copolymers. If copolymers are used, they can be random or block copolymers. For example, a suitable thermoplastic polymer is a polyolefin homopolymer or a polyolefin copolymer comprising from 1 to 30 mole% of an alpha-olefin having from 2 to 8 carbon atoms. Suitable thermoplastic polymers preferably have a melt index of less than 60, preferably less than 20, more preferably less than 15, and most preferably less than 10, as measured by ASTM D-1238, Condition L at 230°C.

A preferred method uses 5% by weight of a high melt index butene-1 homopolymer having a melt index equal to or greater than 20, and 95% by weight of a thermoplastic, e.g. a linear low density polyethylene.

Blending of the components can occur by, for example, dry tumble blending, masterbatch, or melt compounding techniques. The method of combining the ingredients of the formulation is important. For example, in most cases, it is desirable to use the least amount of energy to merge the components into an effective blend. Therefore the preferred method of blending is dry blending the components in a powder form. This mixture may, of course, be shaped in an additional step.

### EXAMPLES

Blends were prepared with GRSN-7047 linear low density polyethylene (LLDPE) with a 1.0 melt index available from Union Carbide Corporation, Duraflex® DP0800, polybutylene and Duraflex® PB0400 polybutylene, available from Shell Chemical Company, Houston, Texas. The components were dry blended before extruding.

The typical physical properties of the high index polybutylene (DP0800) are listed below.

**TABLE I**

| Typical Physical Properties of DP0800 Polybutylene | | | |
|---|---|---|---|
| | ASTM | Polybutylene DP0800 Units | |
| | Test Method | Metric | English |
| Melt Index @ 190°C | D1238 "E" | 200g/10min | - |
| @ 230°C | D1238 "L" | 490g/10min | - |
| Density | D1505 | 0.915g/cm³ | 57.1 lb/ft |
| Tensile strength @ yield | D638 | 13.8 MPa | 2000 psi |
| Tensile strength @ break | D638 | 29.0 MPa | 4200 psi |
| Elongation at break | D638 | 350% | - |
| Modulus of elasticity | D638 | 241 MPa | 35000 psi |
| Hardness, Shore | D2240 | 55 D Scale | - |
| Brittleness temperature | D746 | -18°C | 0°F |
| Melting point range | DSC | 124-126°C | 225-259°F |
| Soft point, Vicat | D1525 | 116°C | 241°F |
| Thermal conductivity at 25°C (77°F) | C177 | 16Kcal/m/hr/°C/cm | 1.25Btu/ft/hr/°F/in |

In Tables II to V the blends were extruded using a 3.18 cm (1¼") Brabender extruder with temperatures at Zone 1 of 190°C and at Zones 2-5 of 215°C and a L/D of 24:1.

In Table VI the blends and control were extruded using a 1.91 cm (3/4 inch) Brabender extruder with temperatures at Zones 1-4, 175°C and 234°C at the die. The L/D was 25:1. The results are recorded in Tables II to V below.

It can be seen from the data that significant improvements in throughput and power required are achieved using the claimed process.

Polybutylene with a melt index as low as 20 g/10 min. and concentrations as low as 1.0w% showed improvements in processability.

**TABLE II**

| 30 RPM Extrusion Conditions for LLDPE + DP0800 | | | | | |
|---|---|---|---|---|---|
| | BACK PRESSURE | | CURRENT | THROUGHPUT | |
| | MPa | (psi) | AMP | kg/hr | (lbs/hr) |
| Control | 7.929 | (1150) | 6.75 | 3.60 | (7.93) |
| 2.5w% PB | 6.72 | (975) | 5.25 | 3.03 | (6.68) |
| 5.0W% PB | 6.55 | (950) | 5.0 | 3.0 | (6.7) |

**TABLE III**

| 60 RPM Extrusion Conditions for LLDPE + DP0800 | | | | | |
|---|---|---|---|---|---|
| | BACK PRESSURE | | CURRENT | THROUGHPUT | |
| | MPa | (psi) | AMP | kg/hr | (lbs/hr) |
| Control | 10.51 | (1525) | 8.5 | 7.158 | (15.78) |
| 1.0w% PB | 9.480 | (1375) | 7.25 | 6.319 | (13.93) |
| 2.5w% PB | 8.791 | (1275) | 6.75 | 5.620 | (12.39) |
| 5.0w% PB | 7.929 | (1150) | 6.25 | 5.529 | (12.19) |

**TABLE IV**

| 90 RPM Extrusion Conditions for LLDPE + DP0800 | | | |
|---|---|---|---|
| | BACK PRESSURE | CURRENT | THROUGHPUT |
| | MPa (psi) | (amps) | kg/hr(lbs/hr) |
| Control | 11.79 (1710) | 7.5 | 11.1 (24.4) |
| 2.5w% PB | 9.825 (1425) | 6.25 | 8.550 (18.85) |
| 5.0w% PB | 9.136 (1325) | 6.25 | 8.110 (17.88) |

**TABLE V**

| 60 RPM Extrusion Conditions for LLDPE + PB0400 | | | |
|---|---|---|---|
| | BACK PRESSURE | CURRENT | THROUGHPUT |
| | MPa (psi) | (amps) | kg/hr(lbs/hr) |
| Control | 10.51 (1525) | 8.5 | 7.158 (15.78) |
| 2.5w% | 9.584 (1390) | 7.5 | 6.146 (13.55) |
| control = 100% LLDPE | | | |

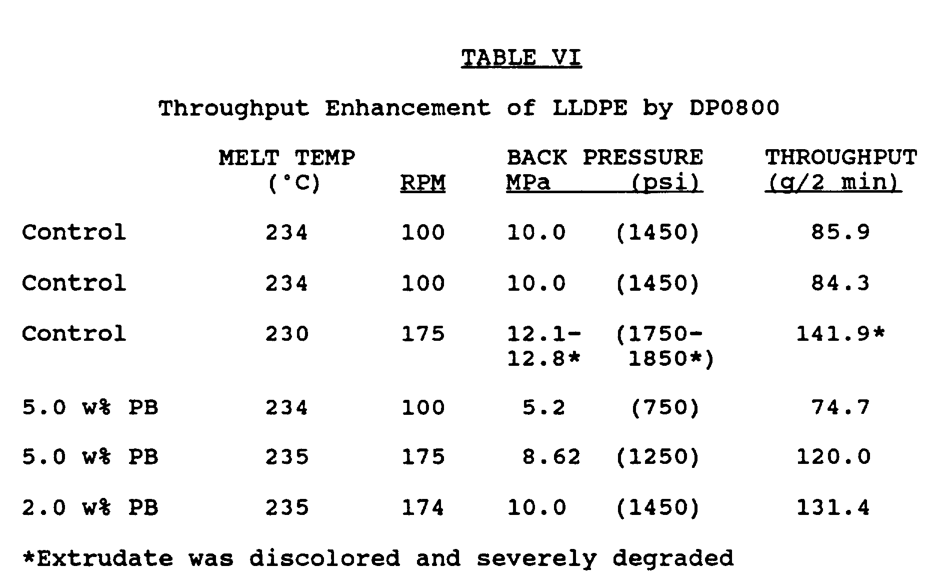

In Table VI the back pressure was raised by increasing the RPM for the blends containing PB to levels approaching the control back pressure. Polymer throughput was significantly increased as can be seen in the last two runs containing PB with extruder speed at 175 and 174 RPM.

Although the invention has been described with preferred embodiments it is to be understood that modifications and variations may be made without departing from the spirit and scope of this invention as claimed.

## Claims

1. Use of polybutylene in improving the extrusion efficiency of a thermoplastic polymer other than polypropylene which is substantially melt incompatible with polybutylene, said polybutylene being used in an amount from 0.2% to 20% by weight of the mixture of polybutylene and the thermoplastic polymer, and having a melt index of from 10 to 1000, as determined by ASTM D-1238 Condition E, at 190°C.

2. Use according to claim 1 wherein the thermoplastic polymer is a polyolefin homopolymer or a polyolefin copolymer comprising from 1 to 30 mole% of an alpha-olefin having from 2 to 8 carbon atoms.

3. Use according to claim 1 wherein the thermoplastic polymer is a low melt index polyethylene homopolymer or copolymer.

4. Use according to any one of the preceding claims wherein the thermoplastic polymer is high density polyethylene, low density polyethylene or linear low density polyethylene.

5. Use according to any one of the preceding claims wherein the thermoplastis polymer is a thermoplastic elastomer.

6. Use according to claim 1 wherein the thermoplastic polymer is an uncured thermosetting polymer.

7. Use according to any one of the preceding claims wherein the thermoplastic polymer has a melt index of less than 20, as measured by ASTM D-1238, Condition L at 230°C.

8. Use according to claim 7 wherein the thermoplastic polymer has a melt index of less than 10.

9. Use according to any one of claims 1 to 8 wherein the polybutylene has a melt index of from 20 to 650.

10. Use according to claim 9 wherein the polybutylene has a melt index of from 100 to 500.

11. Use according to any one of the preceding claims wherein the polybutylene is used in an amount from 1% to 10% ny weight of the mixture.

12. Use according to claim 11 wherein the amount of polybutylene is from 2% to 7% by weight of the mixture.

13. Use according to any one of the preceding claims wherein the polybutylene is a butene-1 homopolymer or a butene-1 copolymer comprising from 1 to 30 mole% of an alpha-olefin having from 2 to 8 carbon atoms.

14. Use according to any one of the preceding claims wherein the mixture is shaped in an additional step.

## Patentansprüche

1. Verwendung von Polybutylen zur Verbesserung der Extrusionseffizienz eines thermoplastischen Polymers,außer Polypropylen, das mit Polybutylen in der Schmelze im wesentlichen unverträglich ist, wobei das Polybutylen in einer Menge von 0,2 bis 20 Gew.-%, bezogen auf das Gemisch von Polybutylen und dem thermoplastischen Polymer, verwendet wird und einen Schmelzindex von 10 bis 100, bestimmt nach ASTM D-1238, Bedingung E, bei 190°C aufweist.

2. Verwendung nach Anspruch 1, wobei das thermoplastische Polymer ein Polyolefinhomopolymer oder ein Polyolefincopolymer, umfassend 1 bis 30 mol-% eines α-Olefins mit 2 bis 8 Kohlenstoffatomen ist.

3. Verwendung nach Anspruch 1, wobei das thermoplastische Polymer ein Polyethylenhomopolymer oder -copolymer mit niedrigem Schmelzindex ist.

4. Verwendung nach einem der vorangehenden Ansprüche, wobei das thermoplastische Polymer Polyethylen hoher Dichte, Polyethylen niederer Dichte oder lineares Polyethylen niederer Dichte ist.

5. Verwendung nach einem der vorangehenden Ansprüche, wobei das thermoplastische Polymer ein thermoplastisches Elastomer ist.

6. Verwendung nach Anspruch 1, wobei das thermoplastische Polymer ein ungehärtetes heiß-härtendes Polymer ist.

7. Verwendung nach einem der vorangehenden Ansprüche, wobei das thermoplastische Polymer einen Schmelzindex von weniger als 20, gemessen nach ASTM D-1238, Bedingung L, bei 230°c aufweist.

8. Verwendung nach Anspruch 7, wobei das thermoplastische Polymer einen Schmelzindex von weniger als 10 aufweist.

9. Verwendung nach einem der Ansprüche 1 bis 8, wobei das Polybutylen einen Schmelzindex von 20 bis 650 aufweist.

10. Verwendung nach Anspruch 9, wobei das Polybutylen einen Schmelzindex von 100 bis 500 aufweist.

11. Verwendung nach einem der vorangehenden Ansprüche, wobei das Polybutylen in einer Menge von 1 bis 10 Gew.-%, bezogen auf das Gemisch, verwendet wird.

12. Verwendung nach Anspruch 11, wobei die Menge an Polybutylen 2 bis 7 Gew.-%, bezogen auf das Gemisch, beträgt.

13. Verwendung nach einem der vorangehenden Ansprüche, wobei das Polybutylen ein Buten-1-homopolymer oder ein Buten-1-copolymer, umfassend 1 bis 30 mol-% eines α-Olefins mit 2 bis 8 Kohlenstoffatomen, ist.

14. Verwendung nach einem der vorangehenden Ansprüche, wobei das Gemisch in einer zusätzlichen Stufe geformt wird.

## Revendications

1. Utilisation de polybutylène pour améliorer l'efficacité de l'extrusion d'un polymère thermoplastique, autre que le polypropylène, qui est pratiquement incompatible à l'état fondu avec le polybutylène, ledit polybutylène, utilisé en une quantité de 0,2% à 20% en poids du mélange de polybutylène et de polymère thermoplastique, et ayant un indice de fluidité à chaud compris entre 10 et 1000, qui est déterminé selon la norme ASTM D-1238, Condition E, à 190°C.

2. Utilisation selon la revendication 1, dans laquelle le polymère thermoplastique est un homopolymère de polyoléfine ou un copolymère de polyoléfine contenant 1 à 30% en moles d'une α-oléfine comportant 2 à 8 atomes de carbone.

3. Utilisation selon la revendication 1, dans laquelle le polymère thermoplastique est un homopolymère ou un copolymère de polyéthylène de faible indice de fluidité à chaud.

4. Utilisation selon l'une des précédentes revendications, dans laquelle le polymère thermoplastique est un polyéthylène haute densité, un polyéthylène basse densité ou un polyéthylène linéaire basse densité.

5. Utilisation selon l'une des précédentes revendications, dans laquelle le polymère thermoplastique est un élastomère thermoplastique.

6. Utilisation selon la revendication 1, dans laquelle le polymère thermoplastique est un polymère thermodurcissable non durci.

7. Utilisation selon l'une des précédentes revendications, dans laquelle le polymère thermoplastique a un indice de fluidité à chaud inférieur à 20, qui est mesuré selon la norme ASTM D-1238, Condition L, à 230°C.

8. Utilisation selon la revendication 7, dans laquelle le polymère thermoplastique a un indice de fluidité à chaud inférieur à 10.

9. Utilisation selon l'une des revendications de 1 à 8, dans laquelle le polybutylène a un indice de fluidité à chaud compris entre 20 et 650.

10. Utilisation selon la revendication 9, dans laquelle le polybutylène a un indice de fluidité à chaud compris entre 100 et 500.

11. Utilisation selon l'une des précédentes revendications, dans laquelle le polybutylène est utilisé en une quantité de 1% à 10% en poids du mélange.

12. Utilisation selon la revendication 11, dans laquelle la quantité de polybutylène est comprise entre 2% et 7% en poids du mélange.

13. Utilisation selon l'une des précédentes revendications, dans laquelle le polybutylène est un homopolymère de butène-1 ou un copolymère de butène-1, contenant 1 à 30% en moles d'une α-oléfine comportant 2 à 8 atomes de carbone.

14. Utilisation selon l'une des précédentes revendications, dans laquelle le mélange est façonné dans une étape supplémentaire.
